# EUROPEAN PATENT SPECIFICATION

(11) **EP 2 961 979 B1**
(45) Date of publication and mention of the grant of the patent: **12.07.2017**
(21) Application number: 14723507.1
(22) Date of filing: 03.03.2014
(51) Int. Cl.: F03B 17/06

(54) **MODULAR FLOATING PIER WITH INTEGRATED GENERATOR OF ENERGY FROM RENEWABLE SOURCES**
MODULARER SCHWIMMDOCK MIT GENERATOR VON ENERGIE AUS ERNEUERBAREN QUELLEN
DOCK FLOTTANT MODULAIR AVEC GÉNÉRATEUR D'ÉNERGIE À PARTIR DE SOURCES RENOUVELABLES

(30) Priority: 02.03.2013 IT NA20130012
(43) Date of publication of application: 06.01.2016
(73) Proprietor: C.E.P.A. Euro Company Programs Africa S.r.l., 81031 Aversa (CE) (IT)
(72) Inventor: ZINNI, Vito, Aversa, Caserta 81031 (IT)
(74) Representative: Bonvicini, Davide
(86) International application number: PCT/IT2014/000064
(87) International publication number: WO 2014/136134

(56) References cited:
- DE-A1-102010 033 788
- US-A1- 2011 254 275
- US-A1- 2013 026 762

## Description

### TECHNICAL FIELD

The "Modular Floating Pier and Integrated Multipurpose Generator of Energy from Renewable Sources" is device for production of electrical and thermal energy from renewable sources in addition to fulfilling the normal functions of a floating pier or platform at the service of boating, beach resorts and maritime activities in general. It take advantage of the river and sea currents, of waves and tides, as well as of wind power and solar power, thanks to a series of significant changes, both structural and functional that make it adaptable and suitable for a variety of functions.

The "Modular Floating Pier and Integrated Multipurpose Generator of Energy from Renewable Sources", represents the *trait d'union* of different technologies for maximum energy efficiency have not yet been realized. US 2013/026762 discloses a hydrokinetic water turbine system configured to be placed in a flowing stream of water that comprises, in combination, a frame structure, a shaft supported by the frame structure to rotate about a horizontally-disposed central axis of the shaft, and a rotor secured to the shaft and having a plurality of spaced-apart blades so that the flowing stream of water revolves the rotor about the central axis of the shaft. The rotor includes longitudinally spaced apart support discs fixed to the shaft and the blades extend between and through the support discs. The blades are fixed to the support discs by fasteners extending from edges of the support discs and perpendicular to longitudinal axes of the blades.

US 2011/0254275 describes a portable wave-swash & coastal-wind energy harvester, which, once placed on a sea coast in the wave-swash zone where water washes up on shore, captures the mechanical energy contained in: (a) waves in the swash zone, and (b) coastal-wind. Energy is extracted through: (a) wave turbines, (b) wind turbines, and (c) wave floats. Rotation of the wave turbines is accomplished by the force of waves. Rotation of the wind turbines is achieved by the force of wind. Up and down motion of the wave floats derived from the water level variation during the uprush and backwash of the wave in the swash zone is converted into rotational motion. The torque produced by the wave turbines, the wind turbines, and the wave floats is transmitted to an alternator through a rotational transmission-system that consists of flywheels, axles, large sprockets, small sprockets, roller chains, bevel gears, one-way clutches, and bearings.

### DISCLOSURE OF INVENTION

By the designation "Modular Floating Pier and Integrated Multipurpose Generator of Energy from Renewable Sources" we understand the dual function of the invention covered by this patent:
- "Modular Floating Pier" with the function of the pier or floating platform at the service of boating, beach resorts and maritime activities in general, composed by floating modular connected to each other in order to create a long floating pier or a floating atoll with the most varied dimensions and geometric shapes.
- "Integrated Multipurpose Generator of Energy from Renewable Sources" with the application of multipurpose technologies and techniques which put together allow to make the best use of the surrounding environmental conditions, above and below the sea, rivers and lakes, maximizing, in the same site of installation, production of electrical and thermal energy from renewable sources (Tidal power electric, hydroelectric, solar, wind, etc..).

In its basic shape, the infrastructure is designed as a common floating pier that instead of the traditional cube-shaped floating elements that sustain it, uses Floating Scooped Waterwheels filled with polyurethane foam or ecological cork that ensures that the flotation of the Pier. The Floating Scooped Waterwheels capture the kinetic energy of the water motion and transmit it, through a transmission system composed of belts and pulleys, to an generator which converts it into electricity.

Adding a whole series of techniques and technologies at its basic structure, it's possible maximize the production of electrical and thermal energy from a renewable source, allowing massive exploitation of the site chosen for installation.

The technologies applicable to the "Modular Floating Pier and Integrated Multipurpose Generator of Energy from Renewable Sources" for production of electrical and thermal energy from renewable sources are listed below:
- River hydroelectric: Production of electrical energy to Water Flowing, by a Floating Scooped Waterwheels that - through a drive system consisting of pulleys and belts - provides mechanical energy to the alternator which converts it into electricity.
- Tidal electric by Tidal and oceanic stream: Production of electrical energy from ocean currents and drift by a Floating Scooped Waterwheels that - through a transmission system consists of pulleys and belts - provides mechanical energy to the alternator which converts it into electricity. Sea currents can be compared to huge rivers flowing within the sea.
- Tidal electric based on exploitation wave Amplitude: Production of electrical energy by exploitation of wave amplitude through the use of hydraulic or pneumatic jacks that in addition to performing the function of shock absorbers, as better described below, pumping and put in pressure a liquid, a fluid or a gas (usually water, oil or air) which powers the hydraulic or pneumatic turbine connected to an electric generator.
- Tidal electric by Fluctuating Water Column : Energy production system with Fluctuating Water Column through the use of a hollow structure of box type. The movement of the waves that raise and lower the water level in the formwork, sets in motion the column of air that is above the water surface. The air coming in and out from the top opening of the column, powers a wind turbine located in a vent of cylindrical shape with conical base. In order not losing a great amount of energy with continuous inversion of the direction of air movement, can be used Wells type wind turbines, able to rotate in the same direction whatever the direction of the flow that feeds them.
- Horizontal Axis Underwater Turbine with current generator: Production of electrical energy from wave motion, ocean currents, drift and river currents, through the use of Horizontal Axis Underwater Turbine positioned on a pole to head down under the Floating Pier.
- Vertical Axis Underwater Turbine with current generator: Production of electrical energy from wave motion, ocean currents, drift and river currents, through the use of Vertical Axis Underwater Turbine positioned on a pole to head down under the Floating Pier.
- Wind energy: Production of electrical energy from wind through the use of horizontal or vertical axis wind turbine offshore installed on the pier.
- Photovoltaic energy: Production of electrical energy from sun through the use of Photovoltaic Modules installed on the Floating Pier by specific structures.
- Thermodynamic Solar Energy: Production of electrical energy from solar source through the use of special Mirrors Thermodynamic Concentration, also known as CSP (Concentrated Solar Power) installed on the Floating Pier by specific structures.
- Thermal Solar Energy: production of thermal energy from solar source through the use of thermal solar collectors Solar-Cooling - installed on the floating pier by specific structures - to produce hot or cold water.

All the technologies used allow the production of electrical and thermal energy ranked among the so-called "Alternative and Renewable Energies".

### BRIEF DESCRIPTION OF DRAWINGS

The "Modular Floating Pier and Integrated Multipurpose Generator of Energy from Renewable Sources" is below described in detail, with the aid of the drawings - which are a practical exemplification of the invention but not to be considered in a limiting sense - where the main elements that compose the invention are identified by numbers and letters unique:
A. Single Module;
B. Single Modules connected to each other forming a linear pier.
   1. Platform;
   2. Bars;
   3. Floating Scooped Waterwheels;
   4. Transmission Axle;
   5. Pulley side Waterwheels;
   6. Transmission Belts;
   7. Pulley placed on the hinge side bow;
   8. Pulley placed on the hinge side aft;
   9. Pulley side generator;
   10. Gearbox;
   11. Alternator;
   12. Service Pedestal;
   13. Hinges or coupling;
   14. Double Plate with anchor ring;
   15. Anchor Chains;
   16. Tensioners rod;
   17. Hydraulic or pneumatic jacks;
   18. High-pressure pipes;
   19. Accumulation tank of compressed liquid, fluid or gas;
   20. Compressed liquids, fluids or gases Pipeline;
   21. Pelton or Francis Turbine;
   22. Electric generator;
   23. Bitt;
   24. Steel rings for mooring;
   25. Bumper;
   26. Floating Skates;
   27. Tilting Support Structure;
   28. Hinges with ball bearing;
   29. Conjunction Platform;
   30. Steel tie rods;
   31. Tensioners;
   32. Plate with anchor ring;
   33. Conical Hollow Formwork;
   34. Cylindrical Air vent with conical base;
   35. Wells Type Turbine;
   36. Vertical axis wind turbine (VAWT).

### INDUSTRIAL APPLICABILITY

The "Modular Floating Pier and Integrated Multipurpose Generator of Energy from Renewable Sources" is composed by a Platform (1) that can have any geometric shape and size, below which, on the left and right sides, Containment Bars (2) of the hydraulic wheel are welded, which keep the Floating Scooped Waterwheels (2)on the same geometric axis under the Platform (1), by means of a Transmission Axle (4). At the end of Transmission Axle (4) is installed a waterwheel-side pulley (5), which is connected by way of specific Transmission Belts (6) with three other pulleys: Pulley placed on the bow hinge side (7), Pulley placed on the aft hinge side (8) and generator-side pulley (9). The generator-side pulley (9) is connected to a Gearbox (10) which has the function of raising the number of revolutions provided to the alternator (11). The alternator (11) is fixed to a Service Pedestal (12) that houses inside the equipment (Inverter, current Rectifier, electric instrument board and possibly energy storage systems) necessary to transform and possibly accumulate, the energy generated by the alternator (11). This energy is used in the site or transmitted to land through suitable electric cables and fed into the national electric grid through a use tax counter.

The Floating Scooped Waterwheels (3) intercept the mass of water in motion and transmit mechanical energy to the alternator (11) by means of a transmission system that can be - depending on the characteristics of the installation site - of two types:
- Modular Transmission: one Transmission Belt (6) connects the waterwheel-side pulley (5) with the generator-side pulley (9)
- Integral Transmission: three Transmission Belts (6) connect the waterwheel-side pulley (5) with the pulleys (7), (8) and (9).

The last configuration allows to sum the torque generated by all the Floating Scooped Waterwheels (3) thus increasing the production of electric energy.

At the bow and aft of the platform (1), are the hinges (13) that allow to assemble any number of modules (A), in order to form a convoy of interconnected modules that can take the form of linear pier ( B) or atoll. In the four corners of the Platform (1) there are Double Plates with Anchor Rings (14), that allow to anchor the pier to ballast lying on the bottom by means of Anchor Chains (15).

Once the pier (B) has been assembled with a given number of modules (A) - in order to maintain the Floating Scooped Waterwheels (3) equally spaced between them so that they will not to collide against each other due to the wave motion - rod Tensioners (16) are used, which are attached to the lower ends of the Containment Bars (2) of the hydraulic wheel. In the middle of said Tensioners (16), an hydraulic or pneumatic piston (17) is inserted - placed in correspondence of the hinges or coupling (13) - that in addition to fulfilling the function of damper to adjust the incidence of opening and closing of the coupling between a Module (A) and the other - serves as a pump to pressurize a liquid, a fluid or a gas (usually water, oil or air) that is pumped by means of high pressure pipes (18) and compressed in suitable Tanks (19) of cylindrical shape positioned under the Platform (1). The pressurized liquid, fluid or gas accumulated in tanks (19), powers Pelton or Francis turbines (21) connected to an electric generator (22), thereby producing energy from wave motion.

For the production of electric energy from the Fluctuating Water Column System, at the sides of the Floating Pier kits are fixed, what we referred to as "Power Geyser" composed by a Conical Hollow Formwork (33) with a cylindrical air vent with conical base (34) that houses inside a wind turbine which can be of type Wells (35).

For the production of electric energy from wind, Vertical or Horizontal Axis Wind Turbine are installed on the floating pier. To allow the mooring of nautical vehicles at the pier, on the left and right sides of the platform (1) are placed Bitt (23) and Steel Rings (24). Always on the left and right sides of the platform (1), there are Bumpers (25).

To ensure greater stability and flotation of the pier, especially where the wave motion is particularly active and difficult, it is possible to apply to the sides of the pier pairs of Floating Skates (26) by a Tilting Support Structure (27) fixed to the sides of the Platform (1) through hinges with ball bearing (28). Skates (26) are held together by a Conjunction Platform (29).

At the bow are installed two Steel tie rods (30) with Tensioners (31). Steel tie rods are fixed to cross between the Anchor rings (14) placed under the corners of the Platform (1) and Anchor Rings (32) located at bow on the tips of the Floating Skates (26). The Steel tie rods (30) allow the Floating Skates (26) to remain perfectly aligned with the pier without suffer the azimuth movements generated by the waves coming sideways. Instead pneumatic or hydraulic jacks (17) are used to regulate the tilting movement which in addition to allowing Floating Skates (26) to oscillate with a tilt range of +10 / 15° -10/15° favoring the motion wave, act as a pump to pressurize a fluid, a liquid or a gas (usually water, oil or air), which is pumped by high pressure pipes (18) and compressed in Tanks19) of cylindrical shape placed under the Platform (1). The pressurized liquid, fluid or gas stored in Tanks (19) powers Pelton or Francis turbines (21) connected to an electric generator (22), so generating energy from sea waves.

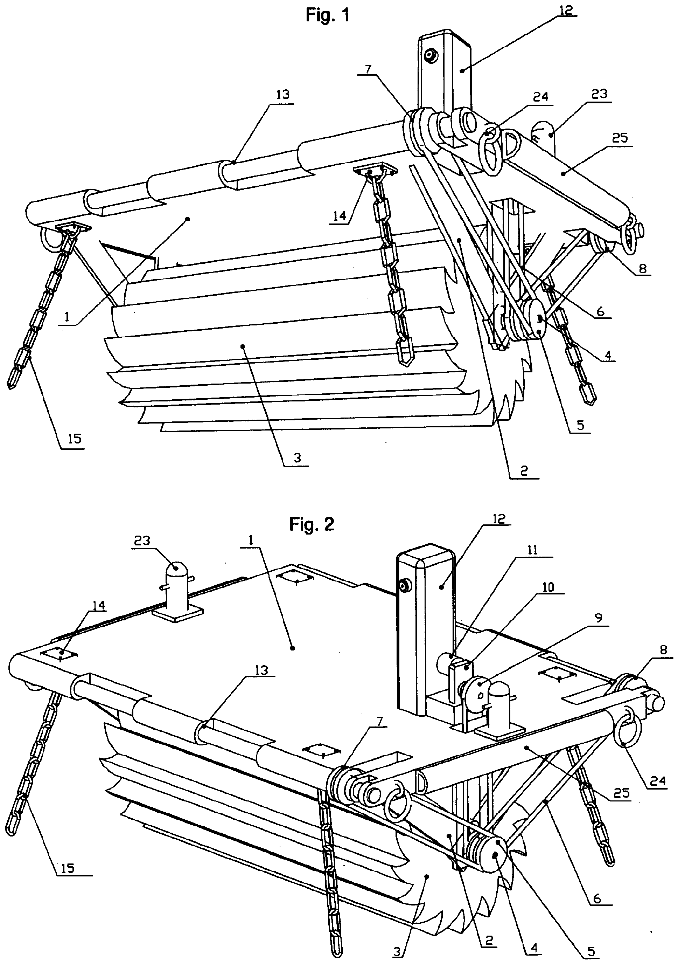

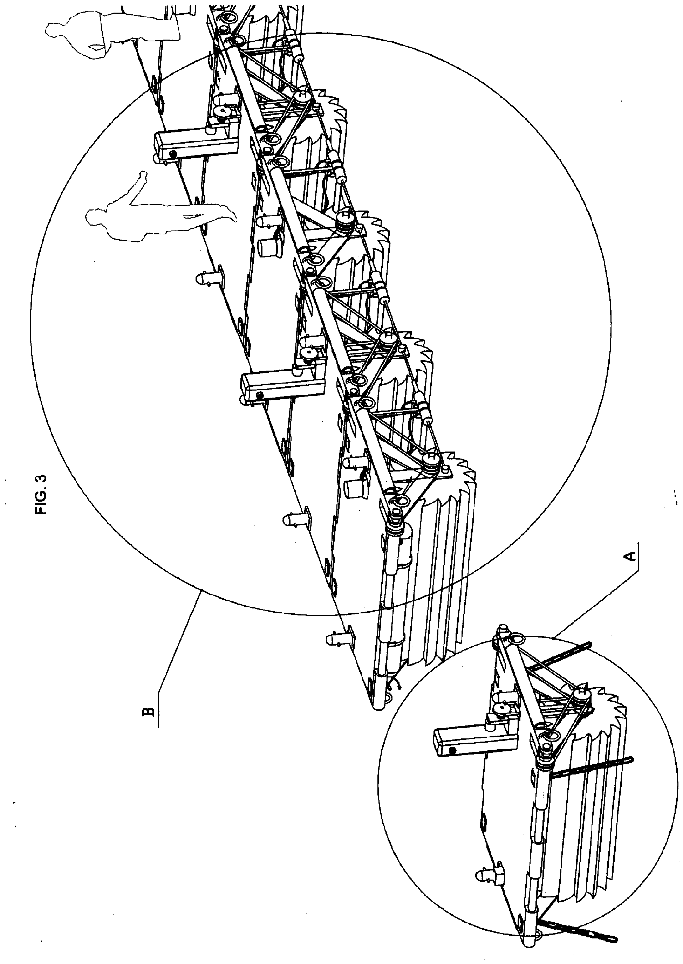

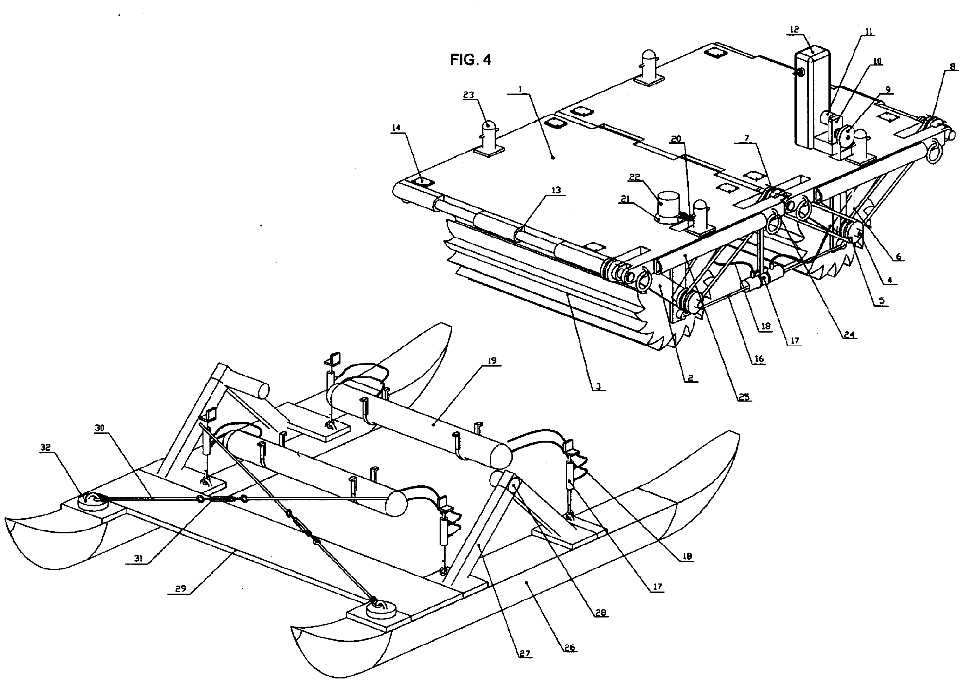

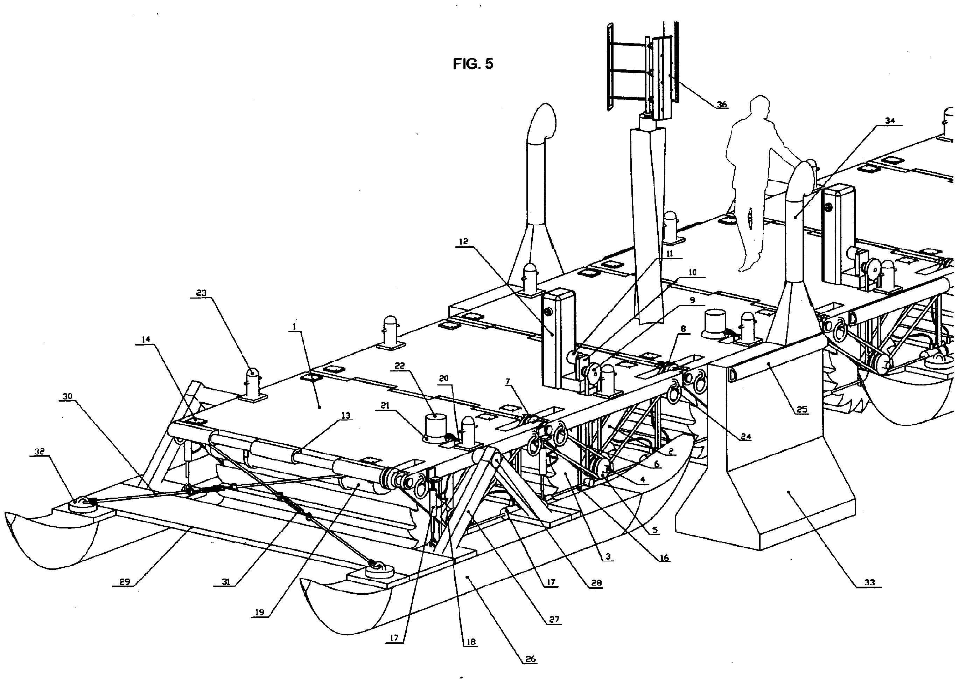

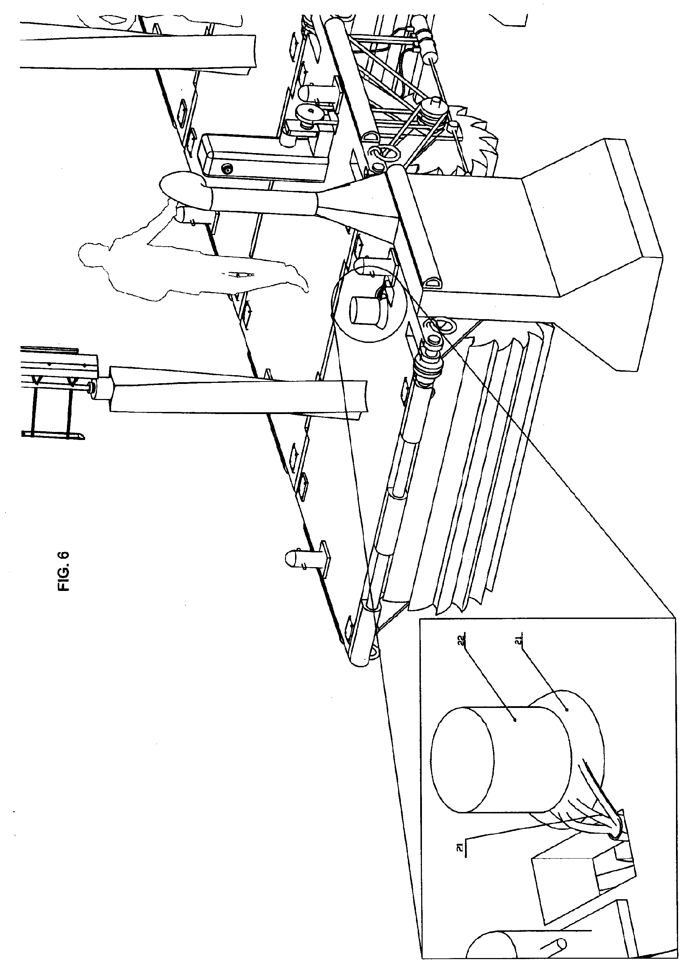

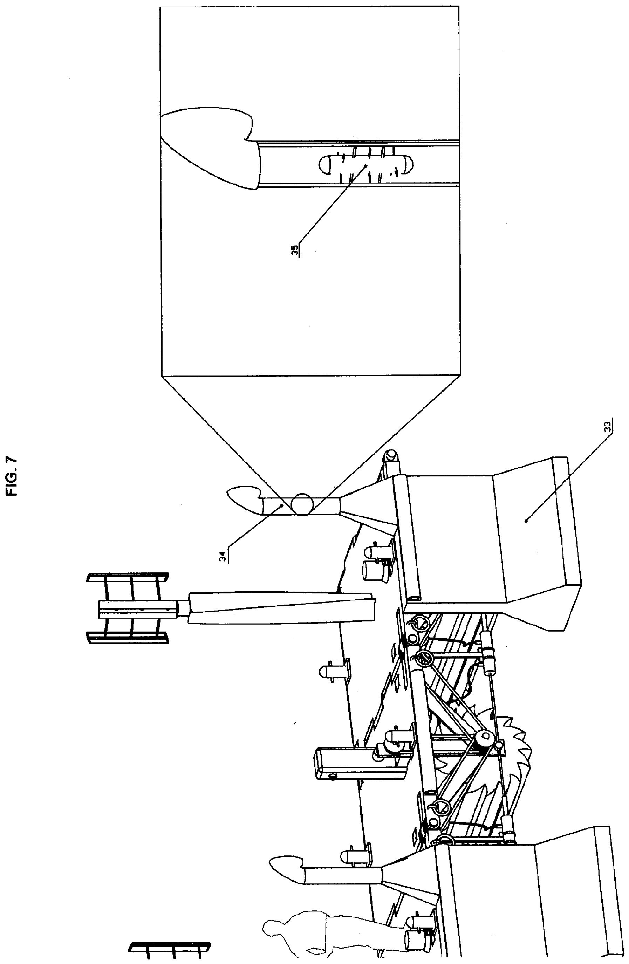

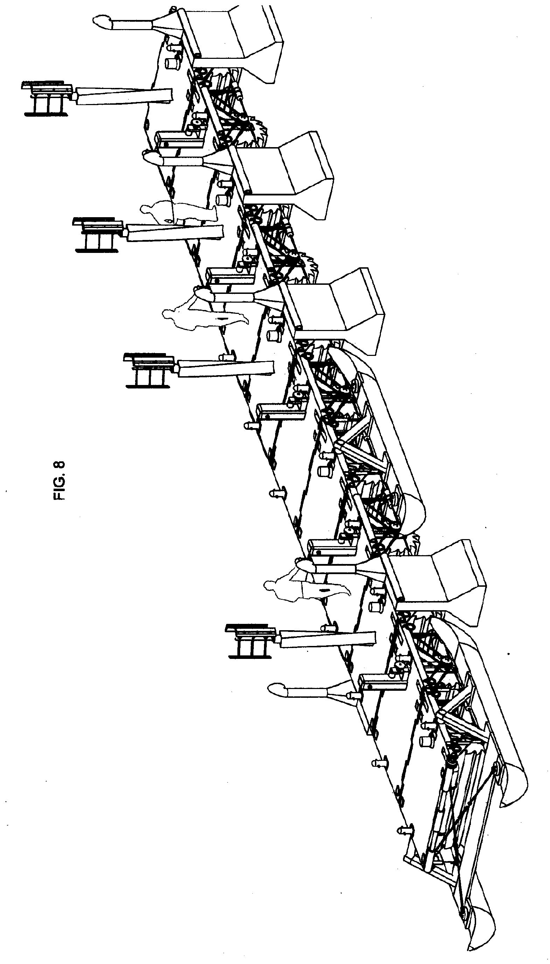

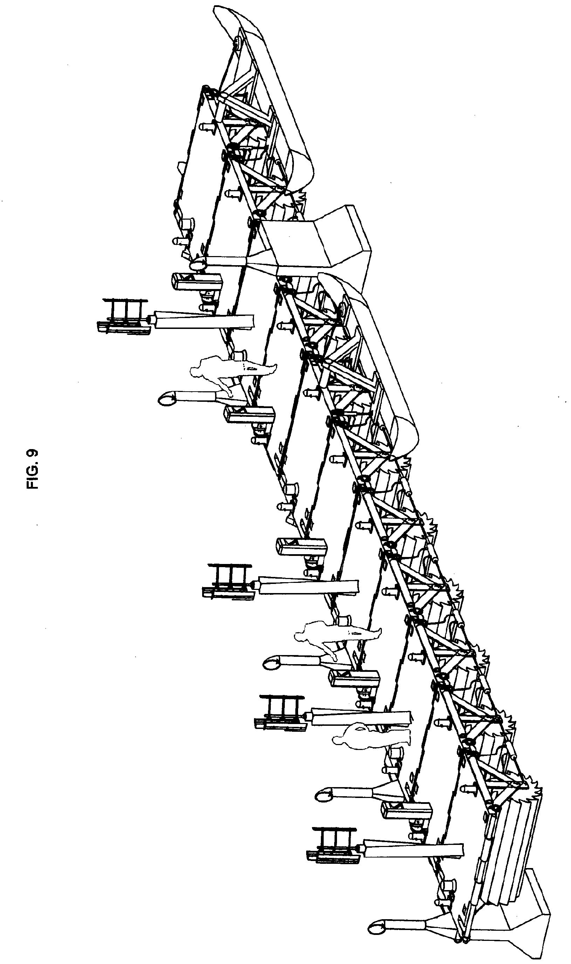

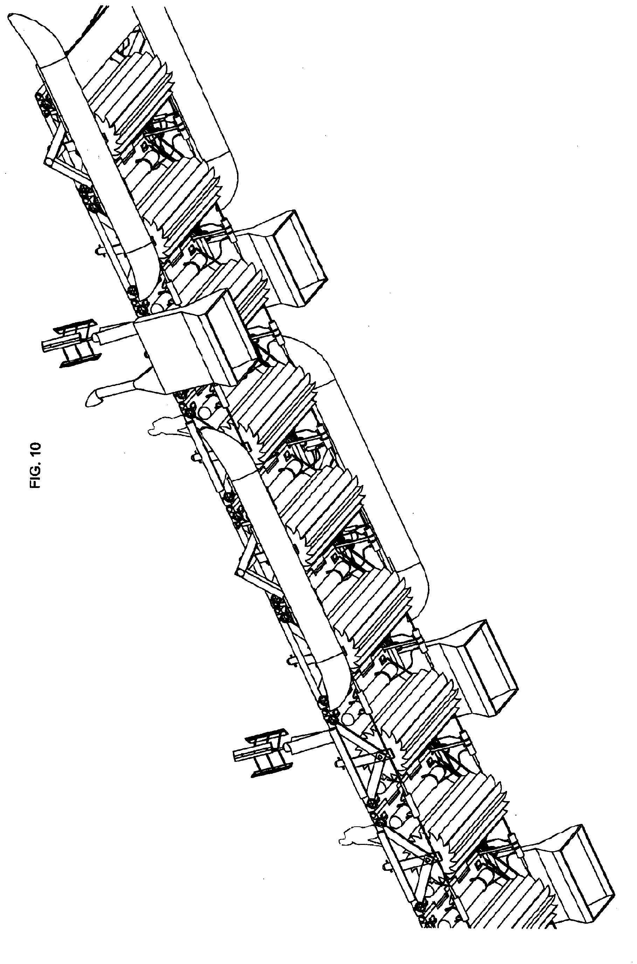

## Claims

1. A modular floating pier and integrated multipurpose generator of energy from renewable sources assembled by the union of single modules (A) and comprising a platform (1), wherein the single modules (A) comprise floating scooped waterwheels (3), and said floating scooped waterwheels (3) are equipped with a transmission axle (4) and filled with polyurethane foam or ecological cork, the waterwheels being placed under the platform (1) by means of containment bars (2), **characterized in that**: one or more pairs of floating skates (26) are applied to the sides of the pier by means of a tilting support structure (27) fixed to the side of the platform (1) through hinges with ball bearing (28), said floating skates (26) being held together by a conjunction platform (29), wherein at the their bow two steel tie-rods (30) provided with specific tensioners (31) are installed, the steel tie-rods (30) being fixed crosswise between anchor rings (14) placed under the corners of the platform (1) and anchor rings (32) located at the bow on the tips of the floating skates (26).

2. The modular floating pier and integrated multipurpose generator of energy from renewable sources as claimed in claim 1, **characterised by** a modular transmission system composed by one transmission belt (6) that connects a waterwheel-side pulley (5) with a generator-side pulley (9).

3. The modular floating pier and integrated multipurpose generator of energy from renewable sources as claimed in claim 1, **characterised by** an integral transmission system composed by three transmission belts (6) that connect a waterwheel-side pulley (5) with three pulleys (7, 8, 9).

4. The modular floating pier and integrated multipurpose generator of energy from renewable sources as claimed in claim 1, **characterised by** a system of pistons (17) which, due to the wave motion, put in pressure a liquid, a fluid or a gas (usually water, oil or air), the liquid, fluid or gas being pumped by means of high pressure pipes (18) and compressed in suitable tanks (19) of cylindrical shape positioned under the platform (1).

5. The modular floating pier and integrated multipurpose generator of energy from renewable sources as claimed in claim 1, **characterised by** a system for generating electric energy of the fluctuating water column type composed by a conical hollow formwork (33) with a cylindrical air vent with a conical base (34), placed on top of the conical hollow formwork (33), wherein the cylindrical air vent (34) houses inside a wind turbine generator(35).

## Patentansprüche

1. Schwimmender modularer Steg und eingebauter Mehrzweckgenerator von Energie aus erneuerbaren Quellen, der durch die Vereinigung von Einzelmodulen (A) zusammengebaut wird und eine Plattform (1) umfasst,
wobei
die Einzelmodule (A) schwimmende Wurfräder (3) umfassen, und
die schwimmenden Wurfräder (3) mit einer Übertragungsachse (4) ausgestattet und mit Polyurethanschaum oder umweltfreundlichem Kork gefüllt sind, wobei die Wurfräder mittels Aufnahmestangen (2) unter der Plattform (1) angeordnet sind, **dadurch gekennzeichnet, dass**:
ein oder mehr Paare von schwimmenden Kufen (26) an den Seiten des Stegs mittels einer kippbaren Stützstruktur (27) aufgebracht sind, die an der Seite der Plattform (1) durch Scharniere mit Kugellager (28) befestigt ist, wobei die schwimmenden Kufen (26) durch eine Verbindungsplattform (29) zusammengehalten werden, wobei an ihrem Bogen zwei Zuganker (30) aus Stahl eingebaut sind, die mit speziellen Spannvorrichtungen (31) versehen sind, wobei die Zuganker (30) aus Stahl in Querrichtung zwischen unter den Ecken der Plattform (1) angeordneten Verankerungsringen (14) und am Bogen, auf den Spitzen der schwimmenden Kufen (26) angeordneten Verankerungsringen (32) befestigt sind.

2. Schwimmender modularer Steg und eingebauter Mehrzweckgenerator von Energie aus erneuerbaren Quellen nach Anspruch 1, **gekennzeichnet durch** ein modulares Übertragungssystem, bestehend aus einem Treibriemen (6), der eine wurfradseitige Riemenscheibe (5) mit einer generatorseitigen Riemenscheibe (9) verbindet.

3. Schwimmender modularer Steg und eingebauter Mehrzweckgenerator von Energie aus erneuerbaren Quellen nach Anspruch 1, **gekennzeichnet durch** ein einstückiges Übertragungssystem, bestehend aus drei Treibriemen (6), die eine wurfradseitige Riemenscheibe (5) mit drei Riemenscheiben (7, 8, 9) verbinden.

4. Schwimmender modularer Steg und eingebauter Mehrzweckgenerator von Energie aus erneuerbaren Quellen nach Anspruch 1, **gekennzeichnet durch** ein System von Kolben (17), die dank der Wellenbewegung eine Flüssigkeit, ein Fluid oder ein Gas (im Allgemeinen Wasser, Öl oder Luft) unter Druck setzt, wobei die Flüssigkeit, das Fluid oder das Gas mittels Hochdruckleitungen (18) gepumpt und in geeigneten, unter der Plattform (1) befindlichen Behältern (19) zylindrischer Form komprimiert werden.

5. Schwimmender modularer Steg und eingebauter Mehrzweckgenerator von Energie aus erneuerbaren Quellen nach Anspruch 1, **gekennzeichnet durch** ein System zur Erzeugung von Elektroenergie in der Art einer schwankenden Wassersäule, bestehend aus einer konischen Hohlschalung (33) mit einer zylindrischen Belüftungsöffnung mit einer konischen Basis (34), die auf der Spitze der konischen Hohlschalung (33) angeordnet ist, wobei die zylindrische Belüftungsöffnung (34) im Inneren einer Windkraftanlage (35) untergebracht ist.

## Revendications

1. Ponton flottant modulaire et générateur d'énergie multifonctionnel intégré à partir de sources renouvelables assemblés par l'union de modules individuels (A) et comprenant une plate-forme (1),
dans lequel les modules individuels (A) comprennent des roues à aubes en coquille flottantes (3), et
lesdites roues à aubes en coquille flottantes (3) sont équipées d'un axe de transmission (4) et remplies avec une mousse de polyuréthane ou du liège écologique, les roues à aubes étant placés sous la plate-forme (1) au moyen de barres de confinement (2), **caractérisé en ce que** :
une ou plusieurs paires de patins flottants (26) sont appliquées sur les côtés du ponton au moyen d'une structure de support oscillante (27) fixée sur le côté de la plate-forme (1) par l'intermédiaire d'articulations avec des paliers à billes (28), lesdits patins flottants (26) étant maintenus ensemble par une plate-forme de liaison (29), dans lequel, au niveau de leur proue, deux tirants en acier (30) munis de tendeurs spécifiques (31) sont installés, les tirants en acier (30) étant fixés transversalement entre des anneaux d'ancrage (14) placés sous les coins de la plate-forme (1) et des anneaux d'ancrage (32) situés au niveau de la proue sur les pointes des patins flottants (26).

2. Ponton flottant modulaire et générateur d'énergie multifonctionnel intégré à partir de sources renouvelables selon la revendication 1, **caractérisé par** un système de transmission modulaire composé d'une courroie de transmission (6) qui relie une poulie côté roue à aubes (5) à une poulie côté générateur (9).

3. Ponton flottant modulaire et générateur d'énergie multifonctionnel intégré à partir de sources renouvelables selon la revendication 1, **caractérisé par** un système de transmission intégrale composé de trois courroies de transmission (6) qui relient une poulie côté roue à aubes (5) à trois poulies (7, 8, 9).

4. Ponton flottant modulaire et générateur d'énergie multifonctionnel intégré à partir de sources renouvelables selon la revendication 1, **caractérisé par** un système de pistons (17) qui, à cause du mouvement des vagues, met sous pression un liquide, un fluide ou un gaz (habituellement de l'eau, de l'huile ou de l'air), le liquide, le fluide ou le gaz étant pompé au moyen de tubes à haute pression (18) et comprimé dans des réservoirs appropriés (19) de forme cylindrique positionnés sous la plate-forme (1).

5. Ponton flottant modulaire et générateur d'énergie multifonctionnel intégré à partir de sources renouvelables selon la revendication 1, **caractérisé par** un système de génération d'énergie électrique du type à colonne d'eau fluctuante composée d'un coffrage creux conique (33) avec un évent cylindrique avec une base conique (34), placée sur le dessus du coffrage creux conique (33), dans lequel l'évent cylindrique (34) loge à l'intérieur un générateur d'éolienne (35).
